# EUROPEAN PATENT APPLICATION

(11) **EP 3 141 170 A1**
(43) Date of publication of application: **15.03.2017**
(21) Application number: 16188179.2
(22) Date of filing: 09.09.2016
(51) Int. Cl.: A47J 43/046, A47J 27/00, H05B 6/12

(54) **BLENDER HEATABLE BY HIGH FREQUENCY INDUCTION HEATING**

(30) Priority: 11.09.2015 KR 20150129331; 10.12.2015 KR 20150176316
(71) Applicant: Allnet Electronics Co., Ltd., Gimhae-si, Gyeongsangnam-do 51006 (KR); Park, Chan Hong, Gimhae-si, Gyeongsangnam-do 51001 (KR)
(72) Inventor: PARK, Chan Hong, Gimhae-si Gyeongsangnam-do 51001 (KR)
(74) Representative: Vossius & Partner Patentanwälte Rechtsanwälte mbB

(57) **Abstract**

The present invention relates to a blender heatable by the high frequency induction heating of a new structure which enables food ingredients 1 in a container 20 to be easily cooked by heating. According to the blender, when a user drives the power supply unit 14 by manipulating the input means 31, the heating plate 24 is heated at a high temperature, and the food ingredients 1 inserted in the container 20 is heated.

In addition, there is an advantage that the use of the blender is very convenient since the food ingredients 1 may be cooked by heating the food ingredients 1 in the state of being in the container 20 after grinding the food ingredients 1 using the blender. In addition, since the heating plate 24 is heated by the magnetic force generated in the induction coil 13 provided in the main body 10, the heating plate 24 may be heated at a high temperature in short time, and also the temperature of the heating plate 24 may be finely controlled. Accordingly, there is an advantage of preventing the nutrient of the food ingredients 1 from being destroyed by heating and cooking the food ingredients 1 in the container 20 at an accurate temperature and in a short time.

Particularly, since the heating plate 24 is provided inside of the container 20, there is an advantage that a structure for supplying power to the heating plate 24 is not required as well as it may be prevented that a user gets scald by the heating plate 24.

## Description

### BACKGROUND OF THE INVENTION

### Field of the Invention

The present invention relates to a blender heatable by the high frequency induction heating of a new structure which enables food ingredients in a container to be easily cooked by heating.

### Discussion of the Related Art

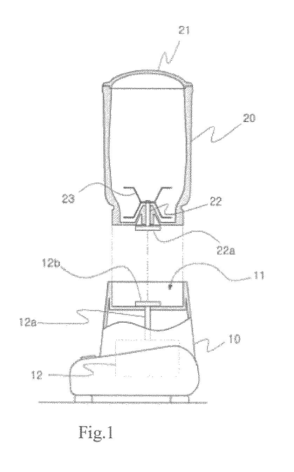

Generally, a blender used for grinding food ingredients in a household includes, as shown in FIG. 1, a main body 10 including a driving motor 12 therein and a container 20 which contains food ingredients and detachably engages with an upper part of the main body 10.

In this case, on an upper surface of the main body 10, a fixing part 11 detachably engaged with a lower end of the container 20 is formed, and at a center portion of the fixing part 11, a driving shaft 12a of the driving motor 12 is extended to be protruded.

The container 20 includes a lid 21 on an upper end thereof, a rotational shaft 22 in an inner bottom surface, and a grinding blade 23 engaged with the rotational shaft 22.

In addition, at an upper end of the driving shaft 12a and at a lower end of the rotational shaft 22, clutches 12b and 22b detachably engaged with each other are provided. Accordingly, it is constructed that the driving force of the driving motor 12 is transferred to the grinding blade 23 when the lower end of the container 20 is coupled with the fixing part 11 of the main body 10 and the clutches 12b and 22b are engaged.

Accordingly, when the driving motor 12 is driven after the lower end of the container 20 is coupled with the fixing part 11 of the main body 10 and the food ingredients are inserted in the container 20, the grinding blade 23 is rotated in high speed and grinds the food ingredients inserted in the container 20.

Since the construction of blender described above is very common, more detailed description for the construction will be omitted.

Meanwhile, There is a problem that it is too cumbersome to heat food ingredients by transferring them into another container after grinding the food ingredients using the blender as such, when cooking baby food, porridge, and so on.

Meanwhile, recently, as shown in many prior art documents such as registered patent number 10-1429702, a blender has been developed and used, which is constructed such that a heater for heating the container 20 is provided in the main body 10 or that a heater is provided in the container 20 so as to heat the food ingredients.

However, when heating the container 20 using the heater provided in the main body 10, the container 20 should be made of metal or glass material that is not melt by heat. Therefore, the problem occurs that a user gets scald by the heated container 20 as well as the manufacture process is difficult and the cost of production increases.

Accordingly, it is required to devise new ways to solve the problems.

### SUMMARY OF THE INVENTION

An object of the present invention to solve the problems is to provide a blender heatable by the high frequency induction heating of a new structure which enables food ingredients in the container 20 to be easily cooked by heating.

According to an aspect of the present invention, a blender heatable by high frequency induction heating includes a main body 10 provided with a driving motor 12 therein, and a container 20 detachably coupled on an upper part of the main body 10 and contains food ingredients 1 therein, wherein a fixing part 11 detachably engaging with a lower end of the container 20 is formed on an upper surface of the main body 10, wherein a driving shaft 12a of the driving motor 12 is extended so as to be protruded into an upper portion of the fixing part 11, wherein a rotational shaft 22 is provided to be connected with the driving shaft 12a of the driving motor 12 on a bottom surface of the container 20, wherein a grinding blade 23 fixed to the rotational shaft 22 is provided Inside of the container 20, the blender further includes a heating plate 24 provided at a lower inside of the container 20 and made of conductive material, an induction coil 13 provided at the fixing part 11, and a power supply unit 14 connected with the induction coil and for supplying high frequency alternating current (AC) power to the induction coil 13, thereby the heating plate 24 is heated by magnetic field generated in the induction coil 13 and food ingredients 1 in the container 20 is heated.

According to another feature of the present invention, the grinding blade 23 includes a magnetic material which is heated in response to magnetic field generated in the induction coil 13.

According to still another feature of the present invention, the blender heatable by high frequency induction heating further comprising temperature sensors 41 and 42 provided for measuring a temperature of the food ingredients 1 in the container 20, and a control unit 30 for controlling an operation of the driving motor by receiving a signal from the temperature sensors 41 and 42.

According to still another feature of the present invention, an input means 31 is provided for a user to input a control signal into the control unit 30 in the main body 10, the input means 31 includes a grinding button 31a for grinding the food ingredients 1 in the container and heating button 31b for heating the heating plate 24, and the temperature sensors 41 and 42 include a lower sensor 41 provided at a lower part in the container 20 and an upper sensor 42 provided at an upper part in the container 20.

According to still another feature of the present invention, the grinding blade 23 is coupled with the rotational shaft 22 through a first one-way bearing 23a, and the blender heatable by high frequency induction heating further includes an agitating blade 25 coupled with the rotational shaft 22 through a second one-way bearing 25a.

According to still another feature of the present invention, the first one-way bearing 23a drivingly connects the rotational shaft 22 with the grinding blade 23, when the rotational shaft 22 is rotated in a normal direction, and the second one-way bearing 25a drivingly connects the rotational shaft 22 with the agitating blade 25, when the rotational shaft 22 is rotated in a reverse direction.

According to still another feature of the present invention, the control unit 30 controls the driving motor 12 such that the rotational shaft 22 is rotated in a normal direction, when a user presses the grinding button 31 a, and the control unit 30 receives and controls a signal for a temperature in the container 20 measured by the lower sensor 41 and the upper sensor 42, when a user presses the heating button 31b.

According to still another feature of the present invention, the rotational shaft 22 rotates the driving motor 12 in a reverse direction such that the agitating blade 25 is rotated to agitate the food ingredients 1 in the container 20, when a temperature difference measured by the lower sensor 41 and the upper sensor 42 becomes greater than a preconfigured temperature.

Meanwhile, the present invention may be modified in various forms and have several embodiments, and specific embodiments thereof will be shown in accompanying drawings and described in detail in the description. However, the embodiments are not intended for limiting the invention, it is understood that the present invention includes any possible modifications, equivalences and alternatives. In the drawings, similar reference numerals are used for similar elements in describing the drawings.

In addition, the terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

### BRIEF DESCRIPTION OF THE DRAWINGS

FIG. 1 is a side cross-sectional view illustrating a blender of related art.
FIG. 2 is a side cross-sectional view illustrating an exploded state of a blender heatable by the high frequency induction heating according to the present invention.
FIG. 3 is a circuit diagram of a blender heatable by the high frequency induction heating according to the present invention.
FIG. 4 is a side cross-sectional view illustrating a coupled state of a blender heatable by the high frequency induction heating according to the present invention.
FIG. 5 is a side cross-sectional view illustrating the second embodiment of a blender heatable by the high frequency induction heating according to the present invention.
FIG. 6 is a circuit diagram illustrating the second embodiment of a blender heatable by the high frequency induction heating according to the present invention.
FIGS. 7 and 8 are side cross-sectional views illustrating the second embodiment of a blender heatable by the high frequency induction heating according to the present invention.

### DETAILE DESCRIPTION OF THE INVENTION

Hereinafter, a preferred embodiment of the present invention will be described by reference to the accompanying drawings.

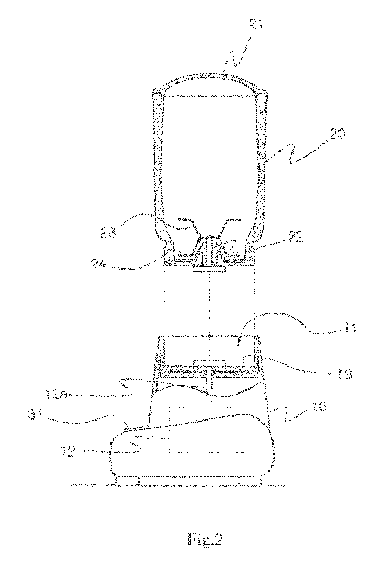

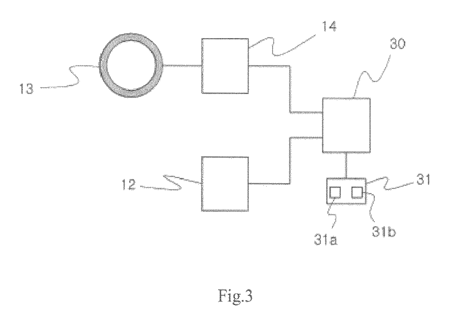

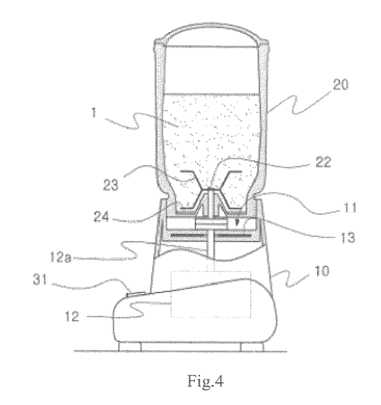

FIGS. 2 to 4 illustrate a blender heatable by the high frequency induction heating according to the present invention. The construction that a main body 10 including a driving motor 12 therein and a container 20 which food ingredients are inserted in and detachably engages with an upper part of the main body 10 is the same as the related art.

In this case, on an upper surface of the main body 10, a fixing part 11 detachably engaged with a lower end of the container 20 is formed. A driving shaft 12a of the driving motor 12 is extended so as to be protruded into an upper portion of the fixing part 11. On a bottom surface of the container 20, a rotational shaft 22 is provided to be detachably connected with the driving shaft 12a of the driving motor 12. Inside of the container 20, a grinding blade 23 fixed to the rotational shaft 22 is provided.

And, according to the present invention, a heating plate 24 is provided at a lower side inside of the container 20. An induction coil 13 is provided at the fixing part 11 of the main body 10. A power supply unit 14 for supplying high frequency alternating current (AC) power to the induction coil 13 is provided with the induction coil 13.

In describing this more particularly, the heating plate 24 is formed of steel or stainless steel material that is conductive material, and formed with a disc shape and fixed to the container 20 so as to be mounted on an upper surface of the bottom plate of the container 20.

The induction coil 13 is constructed by winding a wire of excellent electrical conductive material many times in a ring shape and mounted on a bottom surface of the fixing part 11.

The power supply unit 14 supplies the high frequency AC power to the induction coil 13 by transforming a general power supply. When the high frequency AC power is supplied in the induction coil 13, the induced electromotive force is generated, and the heating plate 24 is heated at a high temperature by the generated induced electromotive force.

In this case, inside of the main body 10, a control unit 30 is provided to control the operation of the driving motor 12 and the power supply unit 14, and on a front surface of the main body 10, an input means 31 is provided for a user to input a control signal into the control unit 30.

The input means 31 uses a general membrane type button or a touch screen type, and includes a grinding button 31a for grinding the food ingredients 1 in the container by driving the driving motor 12 and a heating button 31b for heating the heating plate 24 by operating the power supply unit 14.

Accordingly, by controlling the operation of the driving motor 12 and the power supply unit 14 by manipulating the input means 31 by a user, the food ingredients 1 in the container 20 may be grinded or the food ingredients may be heated.

In the blender heatable by the high frequency induction heating constructed as such, when a user drives the power supply unit 14 by manipulating the input means 31, the heating plate 24 is heated at a high temperature, and the food ingredients 1 inserted in the container 20 is heated.

Accordingly, there is an advantage that the use of the blender is very convenient since the food ingredients 1 may be cooked by heating the food ingredients 1 in the state of being in the container 20 after grinding the food ingredients 1 using the blender.

In addition, since the heating plate 24 is heated by the magnetic force generated in the induction coil 13 provided in the main body 10, the heating plate 24 may be heated at a high temperature in short time, and also the temperature of the heating plate 24 may be finely controlled.

Accordingly, there is an advantage of preventing the nutrient of the food ingredients 1 from being destroyed by heating and cooking the food ingredients in the container 20 at an accurate temperature and in a short time.

Particularly, since the heating plate 24 is provided inside of the container 20, there is an advantage that a structure for supplying power to the heating plate 24 is not required as well as it may be prevented that a user gets scald by the heating plate 24.

According to the embodiment, it is exemplified that only the heating plate 24 is heated, but it is also possible that the grinding blade 23 is heated together by the magnetic force generated in the induction coil 13 by forming the grinding blade 23 with a magnetic material.

In such a case, there is an advantage of heating the food ingredients 1 more efficiently since the grinding blade 23 for grinding the food ingredients 1 is heated together.

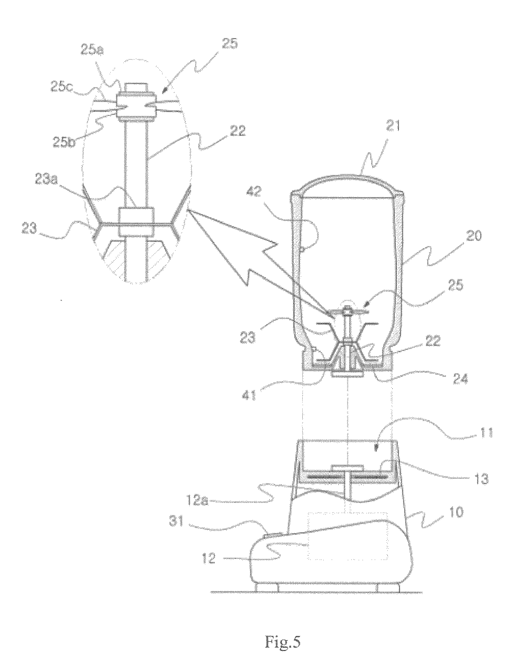

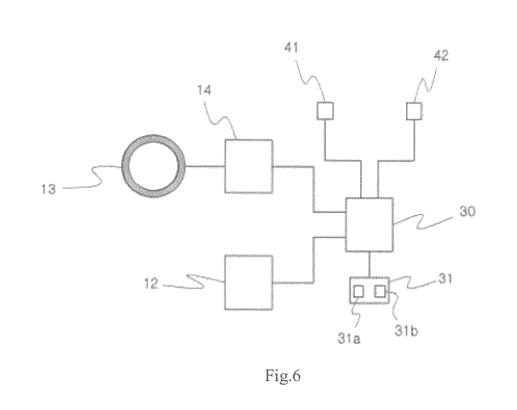

FIGS. 5 to 8 illustrate another embodiment of the present invention. According to the embodiment, the grinding blade 23 is coupled with the rotational shaft 22 through a first one-way bearing 23a.

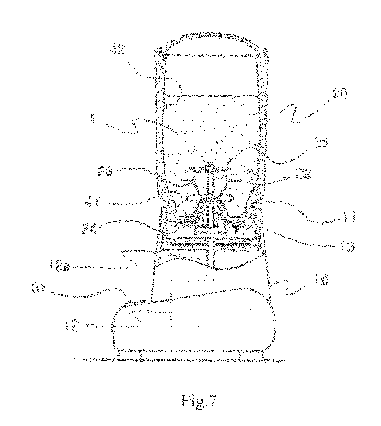

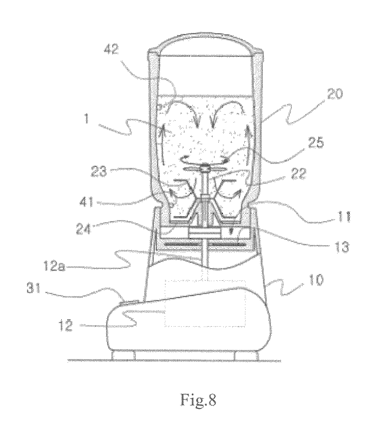

In this case, as shown in FIG. 7, when the rotational shaft 22 is rotated in the normal direction, the first one-way bearing 23a is provided such that the rotational shaft 22 and the grinding blade 23 are rotated together by drivingly connecting the rotational shaft 22 and the grinding blade 23. And, as shown in FIG. 8, when the rotational shaft 22 is rotated in the reverse direction, the connection between the rotational shaft 22 and the grinding blade 23 is released, and only the rotational shaft 22 is rotated while the grinding blade 23 is stopped.

And, an agitating blade 25 is provided with the rotational shaft 22.

The agitating blade 25 is coupled with the rotational shaft 22 through a second one-way bearing 25a. The agitating blade 25 includes a hub 25b coupled on a circumference of the second one-way bearing 25a and a plurality of blades 25c which are extended in a radial direction from a circumference of the hub 25b. Accordingly, when the agitating blade 25 is rotated, the food ingredients 1 in the container 20 is agitated in a vertical direction and mixed.

In this case, as shown in FIG. 7, when the rotational shaft 22 is rotated in the normal direction, the second one-way bearing 25a is provided such that the connection between the rotational shaft 22 and the agitating blade 25 is released, and only the rotational shaft 22 is rotated while the agitating blade 25 is stopped. And, as shown in FIG. 8, when the rotational shaft 22 is rotated in the reverse direction, the rotational shaft 22 and the agitating blade 25 are rotated together by drivingly connecting the rotational shaft 22 and the agitating blade 25.

Since the structures of the first and second one-way bearings 23a and 25a that selectively transfer the driving force depending on the rotational direction of the rotational shaft 22 connected to the driving shaft 12a are commonly used, more detailed description will be omitted.

And, inside of the container 20, temperature sensors 41 and 42 are provided to measure the temperature of the food ingredients 1 in the container 20. The control unit 30 is configured to control the operation of the driving motor 12 by receiving the signal from the temperature sensors 41 and 42.

In this case, the temperature sensors 41 and 42 include a lower sensor 41 provided at a lower part in the container 20 and an upper sensor 42 provided at an upper part in the container 20.

As shown in FIG. 7, when a user presses the grinding button 31a, the control unit 30 controls the driving motor 12 to be rotated in the normal direction and the grinding blade 23 to be rotated to grind the food ingredients 1 contained in the container 23.

And, when a user presses the heating button 31b, the control unit 30 turns on the power supply unit 14 and the heating plate 24 is heated. At the same time, the control unit 30 receives the signal from the lower sensor 41 and the upper sensor 42. When the difference between the lower temperature and the upper temperature of the food ingredients 1 in the container 20 becomes greater than a preconfigured temperature, as shown in FIG. 8, the control unit 30 rotates the driving motor 12 in the reverse direction such that the agitating blade 25 is rotated to agitate the food ingredients 1 in the container 20.

For example, the control unit 30 is configured to agitate the food ingredients 1 by the agitating blade 25 by rotating the driving motor in the reverse direction 12, when the difference between the temperature of the food ingredients 1 measured by the lower sensor 41 and the temperature of the food ingredients 1 measured by the upper sensor 42 becomes greater than 10 °C.

The blender constructed as such grinds the food ingredients 1 by rotating the grinding blade 23 only while the driving motor 12 is rotated in the normal direction when grinding the food ingredients 1.

And, when the power supply unit 14 is turned on and the food ingredients are heated, the control unit 30 measures the temperature difference between the upper part and the lower part of the food ingredients 1 by receiving the signals from the temperature sensors 41 and 42. When the temperature difference between the lower temperature and the upper temperature of the food ingredients 1 becomes greater than a preconfigured temperature (10 °C, in the embodiment), the control unit 30 rotates the driving motor 12 in the reverse direction such that the agitating blade 25 is rotated to agitate the food ingredients 1 in the container 20. Consequently, it may be prevented that the food ingredients 1 in the lower part are excessively heated and burned.

Accordingly, there is an advantage that the food ingredients 1 in the container 20 may be efficiently grinded, and the food ingredients 1 may be cooked evenly by agitating the food ingredients 1 by rotating the agitating blade 25 automatically when there is great temperature difference between the upper part and the lower part of the food ingredients when heating the food ingredients 1.

According to the blender heatable by the high frequency induction heating according to the present invention, when a user drives the power supply unit 14 by manipulating the input means 31, the heating plate 24 is heated at a high temperature, and the food ingredients 1 inserted in the container 20 is heated.

Accordingly, there is an advantage that the use of the blender is very convenient since the food ingredients 1 may be cooked by heating the food ingredients 1 in the state of being in the container 20 after grinding the food ingredients 1 using the blender.

In addition, since the heating plate 24 is heated by the magnetic force generated in the induction coil 13 provided in the main body 10, the heating plate 24 may be heated at a high temperature in short time, and also the temperature of the heating plate 24 may be finely controlled.

Accordingly, there is an advantage of preventing the nutrient of the food ingredients from being destroyed by heating and cooking the food ingredients in the container 20 at an accurate temperature and in a short time.

Particularly, since the heating plate 24 is provided inside of the container 20, there is an advantage that a structure for supplying power to the heating plate 24 is not required as well as it may be prevented that a user gets scald by the heating plate 24.

So far, the preferred embodiments of the blender heatable by the high frequency induction heating according to the present invention has been described, but the present invention is not limited thereto. The embodiments in various modifications within the scope of the description of the present invention and the claims below are possible, and these are also included in the scope of the present invention.

## Claims

1. A blender heatable by high frequency induction heating, comprising:
a main body 10 provided with a driving motor 12 therein; and
a container 20 detachably coupled on an upper part of the main body 10 and contains food ingredients 1 therein,
wherein a fixing part 11 detachably engaging with a lower end of the container 20 is formed on an upper surface of the main body 10,
wherein a driving shaft 12a of the driving motor 12 is extended so as to be protruded into an upper portion of the fixing part 11,
wherein a rotational shaft 22 is provided to be detachably connected with the driving shaft 12a of the driving motor 12 on a bottom surface of the container 20,
wherein a grinding blade 23 fixed to the rotational shaft 22 is provided Inside of the container 20 the blender further comprising,
a heating plate 24 provided at a lower inside of the container 20 and made of conductive material, an induction coil 13 provided at the fixing part 11; and
a power supply unit 14 connected with the induction coil and for supplying high frequency alternating current (AC) power to the induction coil 13,
whereby the heating plate 24 is heated by magnetic field generated in the induction coil 13 and food ingredients 1 in the container 20 is heated.

2. The blender heatable by high frequency induction heating of claim 1,
wherein the grinding blade 23 includes a magnetic material which is heated in response to magnetic field generated in the induction coil 13.

3. The blender heatable by high frequency induction heating of claim 1,
further comprising temperature sensors 41 and 42 provided for measuring a temperature of the food ingredients 1 in the container 20, and a control unit 30 for controlling an operation of the driving motor by receiving a signal from the temperature sensors 41 and 42.

4. The blender heatable by high frequency induction heating of claim 3,
wherein an input means 31 is provided for a user to input a control signal into the control unit 30 in the main body 10,
wherein the input means 31 includes a grinding button 31a for grinding the food ingredients 1 in the container and heating button 31b for heating the heating plate 24, and
wherein the temperature sensors 41 and 42 include a lower sensor 41 provided at a lower part in the container 20 and an upper sensor 42 provided at an upper part in the container 20.

5. The blender heatable by high frequency induction heating of claim 1,
wherein the grinding blade 23 is coupled with the rotational shaft 22 through a first one-way bearing 23a, and
further comprising an agitating blade 25 coupled with the rotational shaft 22 through a second one-way bearing 25a.

6. The blender heatable by high frequency induction heating of claim 5,
wherein the first one-way bearing 23a drivingly connects the rotational shaft 22 with the grinding blade 23, when the rotational shaft 22 is rotated in a normal direction, and
wherein the second one-way bearing 25a drivingly connects the rotational shaft 22 with the agitating blade 25, when the rotational shaft 22 is rotated in a reverse direction.

7. The blender heatable by high frequency induction heating of claim 4,
wherein the control unit 30 controls the driving motor 12 such that the rotational shaft 22 is rotated in a normal direction, when a user presses the grinding button 31 a, and
wherein the control unit 30 receives and controls a signal for a temperature in the container 20 measured by the lower sensor 41 and the upper sensor 42, when a user presses the heating button 31b.

8. The blender heatable by high frequency induction heating of claim 7,
wherein the control unit 30 rotates the driving motor 12 in a reverse direction such that the agitating blade 25 is rotated to agitate the food ingredients 1 in the container 20, when a temperature difference measured by the lower sensor 41 and the upper sensor 42 becomes greater than a preconfigured temperature.
